# EUROPÄISCHE PATENTSCHRIFT

(11) **EP 3 144 617 B1**
(45) Veröffentlichungstag und Bekanntmachung des Hinweises auf die Patenterteilung: **06.04.2022**
(21) Anmeldenummer: 16183217.5
(22) Anmeldetag: 08.08.2016
(51) Int. Cl.: F26B 3/06, F26B 17/12, F26B 23/00

(54) **VERFAHREN UND VORRICHTUNG ZUM TROCKNEN VON HOLZSCHNITZELN**
METHOD AND DEVICE FOR DRYING WOOD CUTS
PROCÉDÉ ET DISPOSITIF DESTINÉS AU SÉCHAGE DE COPEAUX DE BOIS

(30) Priorität: 18.08.2015 AT 5462015
(43) Veröffentlichungstag der Anmeldung: 22.03.2017
(73) Patentinhaber: Glock Ökoenergie GmbH, 9112 Griffen (AT)
(72) Erfinder: Glock, Gaston, 9220 Velden (AT)
(74) Vertreter: Patentanwälte Barger, Piso & Partner

(56) Entgegenhaltungen:
- EP-A1- 2 902 738
- WO-A1-2008/083703
- WO-A1-2010/135744
- WO-A1-2014/165995
- US-A- 6 138 381
- US-A1- 2010 115 841
- US-A1- 2015 225 649

## Beschreibung

Die Erfindung betrifft ein Verfahren und eine Vorrichtung zum Trocknen von Holzschnitzeln entsprechend dem Oberbegriff des Anspruches 1 und des Anspruches 4 als Rohstoff für einen Gaserzeuger (Reaktor), wie er in der noch nicht veröffentlichten EP 15158828.8 des gleichen Anmelders beschrieben ist, und der in Verbindung mit einem Blockheizkraftwerk betrieben wird. Die Holzschnitzel, die einem derartigen Holzvergasungsreaktor zugeführt werden, sollen, in Gewichtsprozent gerechnet und auf das Trockengewicht der Holzschnitzel bezogen, eine Feuchtigkeit von höchstens 15 % aufweisen.

Aus der WO 2010/135744 ist die Vergasung minderfertiger Kohle bekannt, bei der die Reduzierung der darin enthaltenen Elemente der Zinkgruppe (Cadmium, Quecksilber und gegebenenfalls Copernicium) konzentriert. Bei diesem Verfahren wird die Kohle durch Stickstoff vorgewärmt, der seinerseits aus einer Luftzerlegungsanlage stammt, in der diese unerwünschten Metalle abgespalten werden. Aus einem unerfindlichen Grund wird in dieser Druckschrift auch nebenbei, zu Beginn der Beschreibung darauf hingewiesen, dass auch Biomasse so zu behandeln wäre, was allerdings in Anbetracht der Abtrennung der Metalle, die es im biogenen Material nicht gibt, ohne jede Berechtigung dort steht.

Aus der US 6,138,381 ist die Verbrennung von Holzschnitzeln in einem Dampferzeuger bekannt, wobei die Verbrennungsluft zum Trocknen der Biomasse herangezogen wird, wozu auch noch Kondensationswärme und Abdampf verwendet werden, wodurch die Trocknung konterkariert wird. Für einen Teilschritt des insgesamt sehr komplexen Verfahrens ist vorgesehen, Luft aus dem Kesselhaus zu verwenden.

Prinzipiell ist Folgendes der Darlegung der Erfindung voranzustellen:
Da "rohe" Holzschnitzel üblicherweise zwischen 35 und 50 Gew.-% Feuchte aufweisen, werden sie im Stand der Technik auf Trockenböden in speziellen Trocknern, zumeist mit Energie, die unabhängig vom Energiefluss der späteren Verwendung der Holzschnitzel bezogen wird (Fremdenergie), getrocknet und sodann in einem oder auch mehreren Bunkern zwischengelagert. Durch den Lagervorgang nehmen sie wieder Feuchte aus der Umgebungsluft auf, was beim Grad der Trocknung zu berücksichtigen ist. Die Trockner und Bunker benötigen Platz, binden Kapital und bedürfen der Wartung.

Eine Holztrocknung beim oder nach dem Einbringen in den Reaktor ist trotz der großen im Reaktor freigesetzten Wärme nicht möglich, da die notwendige Verdampfungswärme die im Reaktor erreichte Temperatur so stark absenkt, dass die zur Synthesegaserzeugung nach dem Boudouardschen Gleichgewicht notwendige Temperatur nicht mehr erreicht wird.

Als Literatur, die sich mit dem Wärmeübergang bei verschiedenen Anlagen und zum Teil mit der Trocknung von Ausgangsmaterial beschäftigt, können die US 2013/257 059 (kompakte Anlage zur Vergasung von Biomassen zur Stromgewinnung), die DE 43 08 522 (Lufterhitzung zur indirekten Lufterwärmung für Trocknungsanlagen), die WO 03/042 520 (Trocknung mit der Restwärme von Abgasen), die EP 2 341 229 Nutzung von Turbinenabgas zur Brennstofftrocknung), die EP 2 902 738 (ebenso) und die DE 10 2014 009 351 (Nutzung von Abwärme in Form von deren Strahlungsenergie) genannt werden. Alle diese Vorrichtungen und Verfahren benötigen aufwändige Apparaturen und greifen in die jeweiligen Reaktorprozesse ein, was stets zu komplexen Folgerungen mit häufigen unkontrollierbaren Nebeneffekten führt. Darüber hinaus ist das Hantieren und Manipulieren von letztlich giftigen und schadstoffbelasteten Abgasen stets bedenklich und macht bei derartiger sekundärer Nutzung die oft vorgeschriebene und stets anzustrebende anschließende Reinigung kompliziert und aufwändig.

Es ist ein Ziel der Erfindung, eine einfachere und kostengünstigere Verfahrensführung und eine entsprechende kostengünstige, robuste, anlagentechnische Ausrüstung zur Verfügung zu stellen.

Erfindungsgemäß geschieht dies durch ein Verfahren bzw. eine Vorrichtung, die die in den kennzeichnenden Teilen der unabhängigen Ansprüche angeführten Merkmale aufweist. Mit anderen Worten, das Verfahren besteht darin, in einem dem Reaktor möglichst unmittelbar vorgelagerten Bunker dem Ausgangsmaterial, das sich in diesem Bunker entsprechend der pro Zeiteinheit den Reaktor zugeführten Menge von oben nach unten bewegt, im unteren Bereich Abluft aus dem Blockheizwerk zuzuführen und dieses im Gegenstrom nach oben durch den Bunker zu leiten. Zur Ergänzung, vor allem aber zum Start, kann vorgesehen sein, mit Fremdenergie über einen Wärmetauscher erwärmte Luft einzublasen. Die entsprechende anlagentechnische Ausbildung sieht erfindungsgemäß vor, einen Bunker, im Verfahrensablauf gesehen, möglichst unmittelbar vor dem Reaktor anzuordnen, in anlagentechnischer Hinsicht bevorzugt oberhalb des Bunkers, und die Abluft des Blockheizkraftwerkes zumindest teilweise durch ein entsprechendes Regelorgan gesteuert, in passender Menge in den unteren Bereich des Bunkers einzuleiten und in seinem oberen Bereich abzuziehen. Bevorzugt wird der Rohmaterialstrom dem Bunker durch möglichst gasdichte Schleusen, bevorzugt Zellradschleusen, oder dergleichen, zugeführt bzw. entnommen.

Die (zumindest überwiegend) verwendete Energie kommt somit von der Abwärme und den Abstrahlverlusten des Motorblocks, die in seiner Umhausung bzw. dem Gebäude, in dem er untergebracht ist, anfällt; ist somit quasi "umsonst". Durch die erfindungsgemäße Verfahrensführung kommt das getrocknete Hackgut nicht mehr mit Umgebungsluft in Berührung und nimmt daher keine Feuchtigkeit mehr auf. Die kostspieligen Trockenböden und Zwischenbunker entfallen gänzlich.

Die Erfindung wird im Folgenden anhand der Zeichnung näher erläutert. Dabei zeigt bzw. zeigen
die Fig. 1 ein erfindungsgemäßes Fließschema, ganz schematisch, und
die Fig. 2 eine schematische Anordnung der einzelnen Bauteile.

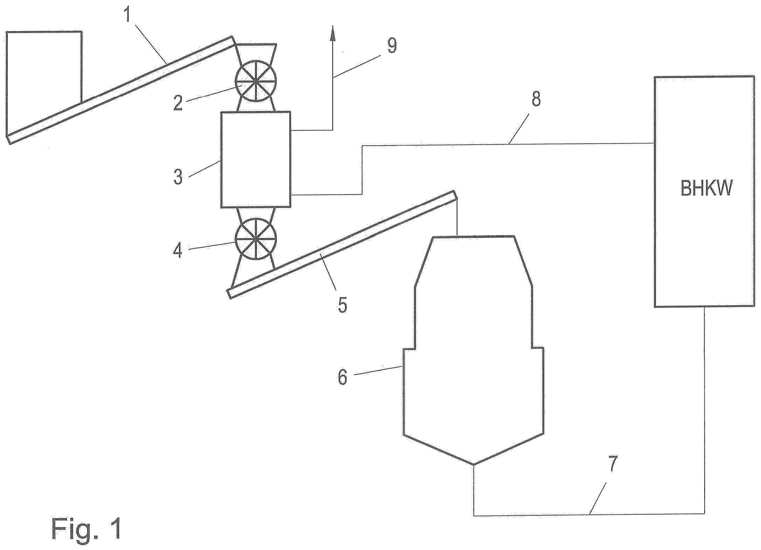

Wie aus Fig. 1 ersichtlich, gelangt der zu vergasende Rohstoff, Holz in geschnitzelter Form, von einer Halde, einem Tank oder Bunker etc. über eine Förderleitung 1 zu einer gasdichten Schleuse 2, beispielsweise einer Zellradschleuse. Von dort fällt oder rutscht der Rohstoff in einen Trockenbunker 3, an dessen unterem Ende er, wiederum durch eine gasdichte Schleuse 4, entnommen wird und, gegebenenfalls durch eine Zwischenleitung 5, zum eigentlichen Reaktor 6 gelangt.

Der Reaktor 6 ist in verschiedenen Ausführungsformen aus dem Stand der Technik bekannt und wird daher an dieser Stelle zur Vermeidung von Weitschweifigkeiten nicht näher erläutert. Es soll nur festgehalten werden, dass aus dem Reaktor 6 zumindest eine Produktgasleitung 7 herausführt (die in der Darstellung rein schematisch vom Boden ausgeht, in vielen Fällen aber von einem weiter oben liegenden Bereich), in der das Produktgas zur weiteren Verwendung transportiert wird. Diese Verwendung schließt nun zumindest ein Blockheizkraftwerk (BHKW) mit ein.

Erfahrungsgemäß herrscht im Gebäude, in dem das BHKW untergebracht wird, und das verbal - umgangssprachlich oft mit mit diesem gleichgesetzt wird, durch dessen Wärmeabstrahlung eine deutlich höhere Temperatur als in der Umgebung oder auch im Gebäude bei stillstehendem BHKW. Erfindungsgemäß führt vom BHKW, bevorzugt von dessen Dachbereich, bzw. Deckenbereich, in dem sich die Warmluft sammelt, eine regelbare Warmluftleitung 8 in den unteren Bereich des Trockenbunkers 3, und mündet dort in einer oder bevorzugt mehreren düsenartigen Öffnungen ins Innere. Diese zugeführte, durch die Wärmeabstrahlung im BHKW-Gebäude erwärmte Warmluft, die hier zur Trocknung des ankommenden Rohstoffes dient und dieses auch im Gegenstrom erwärmt, wird, nunmehr mit Feuchte beladen, im oberen Bereich des Trockenbunkers 3 durch eine oder bevorzugt mehrere Entnahmeöffnungen und dann durch eine Ringleitung od.dgl. und eine Abluftleitung 9 abgeführt. Diese abgekühlte und mit Feuchte beladene Luft ist unschädlich und wird, gegebenenfalls nach Filterung, in die Umgebung abgelassen.

Durch diese Art der Trocknung erreicht man es, dass im Reaktor 6 leicht und dauerhaft Betriebszustände eingehalten werden können, die für die Holzvergasung besonders günstig und vorteilhaft sind. Es hat sich als besonders vorteilhaft herausgestellt, dass der Trockenbunker 3, in dem die Trocknung stattfindet und der Reaktor 6 räumlich möglichst eng beieinander angeordnet sind, sodass das in den Reaktor gelangende Gut, der Rohstoff, die Holzschnitzel, nicht nur trocken sind, wie es schon bisher angestrebt worden ist, sondern darüber hinaus wegen der Nachbarschaft auch noch thermische Energie in Form der Erwärmung, die einer Vorwärmung gleich kommt, in den Reaktor zurückgebracht wird. Betreffend die rein schematische Fig. 1 bedeutet dies, dass statt der Zwischenleitung 5 die Schleuse 4 direkt am Kopf des Reaktors 6 sitzt. Damit wird die zum Erreichen der günstigen Seite des Boudouardschen Gleichgewichtes notwendige Energie auf besonders vorteilhafte Weise erreicht.

Es hat sich weiters herausgestellt, dass dies, zumindest im Wesentlichen, auch durch den Einsatz von Fremdenergie möglich ist, wenn auch dann, wie bereits erwähnt, die räumliche Nähe und auch die Erwärmung und Trocknung immer nur des in möglichst unmittelbarer Zukunft in den Reaktor (Konverter) gelangenden Rohmaterials sichergestellt wird, da dies die bedeutendste Rolle spielt, da dadurch die zum Trocknen eingesetzte Energie im größtmöglichen Umfang wieder in den Reaktor eingebracht wird, und so die thermischen Verluste gering gehalten werden können. Für den Startvorgang der Holzvergasung und für extreme Betriebssituationen kann das Vorsehen einer bevorzugt nur zusätzlichen Fremdenergieerwärmung nützlich sein. Dabei wird Luft (Umgebungsluft, Abluft aus Gebäuden, etc.) mit Fremdenergie in Wärmetauschern erwärmt und, bevorzugt von unten nach oben, durch den Trockenbunker geblasen, statt oder zusätzlich zur Umgebungsluft des BHKWs. Diese Ausgestaltung bzw. Starthilfe ist in der Fig. 1 nicht dargestellt.

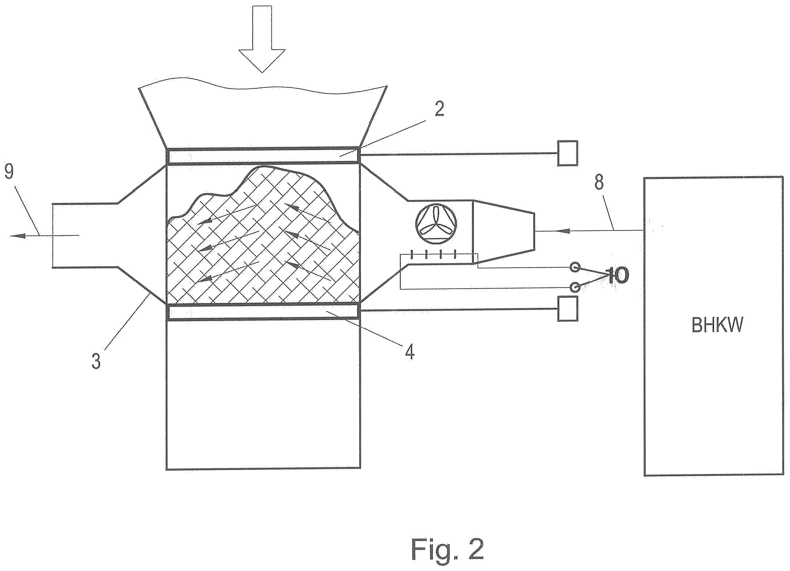

Die Fig. 2 zeigt einerseits, rein schematisch, die oben erläuterte Fremdheizung 10 und andererseits insofern eine Variante, als die erwärmte Luft, sei es vom BHKW, sei es die fremderwärmte, oder eine Kombination, im Wesentlichen horizontal und somit im Querstrom durch den Trockenbunker 3 geblasen wird. Als Schleusen 2, 4 sind Schieber bzw. Drehschieber angedeutet, die Ausbildung der Einströmdüsen bzw. der Austrittsöffnungen ist für den Fachmann in Kenntnis der Erfindung leicht vorzunehmen.

Eine derartige Anordnung kann bei verschiedenen Einbausituationen den zur Verfügung stehenden Platz besser nutzen, die thermischen und verfahrenstechnischen Unterschiede sind vom Fachmann in Kenntnis der Erfindung leicht zu beurteilen und zu berücksichtigen.

Dass bei einer derartigen Prozessführung eine möglichst gute thermische Isolierung des Trockenbunkers und eine Platzierung in der Halle an einer möglichst warmen Stelle, möglichst nahe am Reaktor vorgenommen werden, ist für den Fachmann nach den bisherigen Ausführungen nicht weiter verwunderlich.

Es soll noch darauf hingewiesen werden, dass in der Beschreibung und den Ansprüchen Angaben wie "großteils" bei Materialien über 50 Gew.-%, bevorzugt über 80 Gew.-% und besonders bevorzugt über 95 Gew.-% bedeuten; dass "unterer Bereich" eines Reaktors, Filters, Bauwerks, oder einer Vorrichtung oder, ganz allgemein, eines Gegenstandes, die untere Hälfte und insbesondere das untere Viertel der Gesamthöhe bedeutet, "unterster Bereich" das unterste Viertel und insbesondere einen noch kleineren Teil; während "mittlerer Bereich" das mittlere Drittel der Gesamthöhe meint. All diese Angaben, ebenso wie "oben", "unten", "vorne", "hinten" etc. haben ihre landläufige Bedeutung, angewandt auf den betrachteten Gegenstand in seiner bestimmungsgemäßen Position.

"Im Wesentlichen" kann in der Beschreibung und den Ansprüchen mit einer Abweichung von 10 % des angegebenen Wertes, wenn es physikalisch möglich ist, sowohl nach unten als auch nach oben, ansonsten nur in die sinnvolle Richtung, eingegrenzt werden, bei Gradangaben (Winkel und Temperatur) sind damit ± 10° gemeint.

**Bezugszeichenliste:**

| | | | |
|---|---|---|---|
| 01 | Förderleitung | 07 | Produktgasleitung |
| 02 | Gasdichte Schleuse | 08 | Warmluftleitung |
| 03 | Trockenbunker | 09 | Abluftleitung |
| 04 | Gasdichte Schleuse | 10 | Fremdheizung |
| 05 | Zwischenleitung | BHKW | Blockheizkraftwerk |
| 06 | Reaktor | | |

## Patentansprüche

1. Verfahren zum Trocknen von Holzschnitzeln, die als Rohstoff für einen Gas erzeugenden Reaktor (6) verwendet werden, dessen Produktgas zumindest zum Teil in einem Blockheizkraftwerk (BHKW) verwendet wird, wobei Luft aus dem Gebäude oder der Einhausung des BHKWs, die durch dessen Wärmeabstrahlung erwärmt ist, mittels einer Warmluftleitung, die zu einem Trockenbunker (3) führt und in ihn mündet, die Holzschnitzel in diesem Trockenbunker (3) erwärmt und trocknet, und dass die Holzschnitzel durch eine erste luftdichte Schleuse (2) in den Trockenbunker (3) und durch eine zweite luftdichte Schleuse (4) aus dem Trockenbunker (3) gelangen.

2. Verfahren nach Anspruch 1, **dadurch gekennzeichnet, dass** die erwärmte Luft dem Trockenbunker (3) im unteren Bereich zugeführt wird und die abgekühlte feuchte Luft im oberen Bereich aus dem Trockenbunker abgeführt wird.

3. Verfahren nach Anspruch 1, **dadurch gekennzeichnet, dass** die erwärmte Luft im Gegenstrom zu den Holzschnitzeln bewegt wird.

4. Vorrichtung zur Durchführung des Verfahrens nach Anspruch 1, mit einem Lager für Holzschnitzel und mit einem Reaktor (6) und einem in einem Gebäude oder einer Einhausung angeordneten BHKW, mit Fördermitteln für die einzelnen Medien, nämlich Holzschnitzel, Produktgas und Warmluft, die die einzelnen Bauteile, nämlich Lager, Reaktor, BHKW, verbinden, mit zumindest einer aus dem Reaktor (6) herausführenden Produktgasleitung (7) in der das Produktgas zur weiteren Verwendung transportiert wird, wobei diese Verwendung nun zumindest ein Blockheizkraftwerk (BHKW) mit einschließt, wobei zwischen dem Lager und dem Reaktor (6) ein Trockenbunker (3) vorgesehen ist, der für die Holzschnitzel beim Einlass und beim Auslass jeweils eine gasdichte Schleuse aufweist, und dass vom Gebäude bzw. der Einhausung des BHKWs eine Warmluftleitung für Luft, die durch dessen Wärmeabstrahlung erwärmt ist, zum Trockenbunker führt und in ihn mündet, und dass der Trockenbunker zumindest einen Auslass für die abgekühlte, befeuchtete Luft aufweist.

5. Vorrichtung nach Anspruch 4, **dadurch gekennzeichnet, dass** am Trockenbunker (3) der Einlass für die Holzschnitzel und der Auslass für die abgekühlte, befeuchtete Luft in dessen oberem Bereich und der Auslass für die Holzschnitzel und der Einlass für die erwärmte Luft in dessen unterem Bereich angeordnet sind.

6. Vorrichtung nach Anspruch 4 oder 5, **dadurch gekennzeichnet, dass** der Trockenbunker (3) in unmittelbarer Nähe zum Reaktor (6) angeordnet ist.

7. Vorrichtung nach Anspruch 6, **dadurch gekennzeichnet, dass** der Trockenbunker (3) oberhalb des Reaktors (6) angeordnet ist.

8. Vorrichtung nach Anspruch 7, **dadurch gekennzeichnet, dass** der Trockenbunker (3) mit seiner Schleuse (4) am Kopf des Reaktors (6) aufsitzt.

## Claims

1. Method for drying wood chips which are used as raw material for a gas-generating reactor (6), the product gas of which is at least in part used in a combined heat and power plant (BHKW), wherein, by means of a hot air line which leads to a drying hopper (3) and opens into same, air from the building or the housing of the combined heat and power plant, which air is heated by the heat radiation of the combined heat and power plant, heats and dries the wood chips in this drying hopper (3), and the wood chips pass through a first airtight lock (2) into the drying hopper (3) and exit the drying hopper (3) through a second airtight lock (4).

2. Method according to claim 1, **characterised in that** the heated air is supplied to the drying hopper (3) in a lower region and the cooled, moist air is discharged from the drying hopper in an upper region.

3. Method according to claim 1, **characterised in that** the heated air is moved in countercurrent to the wood chips.

4. Device for carrying out the method according to claim 1, comprising a store for wood chips, a reactor (6), and a combined heat and power plant arranged in a building or a housing, conveying means for the individual media, specifically wood chips, product gas and hot air, which conveying means connect the individual components, specifically the store, the reactor and the combined heat and power plant, and comprising at least one product gas line (7) which leads out of the reactor (6) and in which the product gas is transported for further use, wherein this use now includes at least one combined heat and power plant (BHKW), wherein a drying hopper (3) is provided between the store and the reactor (6), which drying hopper has a gas-tight lock for the wood chips in each case at an inlet and an outlet, a hot air line for air which is heated by the heat radiation of the combined heat and power plant leads from the building or the housing of the combined heat and power plant to the drying hopper and opens into same, and the drying hopper has at least one outlet for the cooled, humidified air.

5. Device according to claim 4, **characterised in that**, on the drying hopper (3), the inlet for the wood chips and the outlet for the cooled, humidified air are arranged in the upper region thereof, and the outlet for the wood chips and the inlet for the heated air are arranged in the lower region thereof.

6. Device according to either claim 4 or claim 5, **characterised in that** the drying hopper (3) is arranged in the immediate vicinity of the reactor (6).

7. Device according to claim 6, **characterised in that** the drying hopper (3) is arranged above the reactor (6).

8. Device according to claim 7, **characterised in that** the drying hopper (3) rests with the lock (4) thereof at the top of the reactor (6).

## Revendications

1. Procédé de séchage de copeaux de bois qui servent de matière première pour un réacteur (6) produisant un gaz, dont le produit gazeux est utilisé au moins en partie dans une centrale de cogénération (BHKW),
selon lequel de l'air, qui provient du bâtiment ou de l'enceinte de la centrale BHKW et est chauffé par le rayonnement thermique de cette dernière, chauffe et sèche les copeaux de bois dans une cuve de séchage (3), au moyen d'une conduite d'air chaud menant à cette cuve de séchage (3) et débouchant dans celle-ci, et selon lequel les copeaux de bois entrent dans la cuve de séchage (3) en passant dans un premier sas (2) étanche à l'air et quittent la cuve de séchage (3) en passant dans un deuxième sas (4) étanche à l'air.

2. Procédé selon la revendication 1, **caractérisé en ce que** l'air chauffé est amené à la cuve de séchage (3) dans la partie inférieure, et l'air humide refroidi est évacué dans la partie supérieure de la cuve de séchage.

3. Procédé selon la revendication 1, **caractérisé en ce que** l'air chauffé est déplacé à contrecourant des copeaux de bois.

4. Dispositif de mise en œuvre du procédé selon la revendication 1, comprenant une réserve de copeaux de bois et comprenant un réacteur (6) et une centrale BHKW installée dans un bâtiment ou une enceinte, comprenant des moyens de transport pour les différentes matières, à savoir les copeaux de bois, le produit gazeux et l'air chaud, qui relient les différents composants, à savoir la réserve, le réacteur et la centrale BHKW, comprenant au moins une conduite de produit gazeux (7) qui part du réacteur (6) et dans laquelle le produit gazeux est transporté en vue de son utilisation ultérieure, sachant que cette utilisation englobe au moins une centrale de cogénération (BHKW),
dans lequel une cuve de séchage (3) est prévue entre la réserve et le réacteur (6) et présente respectivement un sas étanche aux gaz pour les copeaux de bois côté entrée et côté sortie, et dans lequel une conduite d'air chaud, destinée à l'air chauffé par le rayonnement thermique de la centrale BHKW, mène du bâtiment ou de l'enceinte de la centrale à la cuve de séchage et débouche dans celle-ci, et dans lequel la cuve de séchage présente au moins une sortie pour l'air humide refroidi.

5. Procédé selon la revendication 4, **caractérisé en ce que** sur la cuve de séchage (3), l'entrée pour les copeaux de bois et la sortie pour l'air humide refroidi sont prévues dans la partie supérieure de celle-ci, et la sortie pour les copeaux de bois et l'entrée pour l'air chauffé se trouvent dans la partie inférieure de celle-ci.

6. Procédé selon la revendication 4 ou 5, **caractérisé en ce que** la cuve de séchage (3) est installée à proximité immédiate du réacteur (6).

7. Procédé selon la revendication 6, **caractérisé en ce que** la cuve de séchage (3) est installée au-dessus du réacteur (6).

8. Procédé selon la revendication 7, **caractérisé en ce que** la cuve de séchage (3) repose avec son sas (4) sur la tête du réacteur (6).
